(19) Europäisches Patentamt / European Patent Office / Office européen des brevets

(11) **EP 1 445 510 B1**

(12) **EUROPÄISCHE PATENTSCHRIFT**

(45) Veröffentlichungstag und Bekanntmachung des Hinweises auf die Patenterteilung:
**12.09.2012 Patentblatt 2012/37**

(51) Int Cl.:
*F16H 35/02* *(2006.01)*

(21) Anmeldenummer: **04002439.0**

(22) Anmeldetag: **04.02.2004**

(54) **Zahnräder mit veränderlichem Übersetzungsverhältnis**

Gears with variable ratio

Engrenage avec rapport de réduction variable

(84) Benannte Vertragsstaaten:
**AT BE BG CH CY CZ DE DK EE ES FI FR GB GR HU IE IT LI LU MC NL PT RO SE SI SK TR**

(30) Priorität: **05.02.2003 SK 212003**

(43) Veröffentlichungstag der Anmeldung:
**11.08.2004 Patentblatt 2004/33**

(73) Patentinhaber: **Colar s.r.o.**
**040 01 Kosice (SK)**

(72) Erfinder: **Murin, Peter**
**044 45 Durdosik c. 153 (SK)**

(74) Vertreter: **Jeck, Anton**
**Jeck - Fleck - Herrmann**
**Patentanwälte**
**Klingengasse 2/1**
**71665 Vaihingen/Enz (DE)**

(56) Entgegenhaltungen:
**EP-A- 0 518 832      FR-A- 863 706**
**GB-A- 889 537       GB-A- 916 273**
**US-A- 3 178 959**

**Beschreibung**

Erfindungsgebiet

Die Erfindung betrifft eine Übersetzungsvorrichtung aus verzahnten Segmenten mit veränderlichem Übersetzungsverhältnis, welche vor allem in mechanischen Maschinen, Motoren und Pumpen verwendet werden, bei denen ein veränderliches Übersetzungsverhältnis während einer einzelnen Umdrehung erforderlich ist.

Stand der Technik

Bekannt sind bisher mechanische, elektrische, pneumatische, hydraulische, magnetische und kombinierte Übersetzungsvorrichtungen, welche die Bewegung und die mechanische Energie von einer Welle auf eine andere übertragen, wobei ein Zahnradpaar eine Bewegung mit einem konstanten, durch das Verhältnis der Zahnanzahl der einzelnen Zahnräder bestimmten Übersetzungsverhältnis ausführt.

Einen Nachteil der bekannten Übersetzungsvorrichtungen bildet das konstante Übersetzungsverhältnis, wobei ein oder zwei Zahnpaare der ineinandergreifenden Zahnräder im Eingriff stehen, und ein optimaler Wirkungsgrad der Übersetzungsvorrichtung nicht gesichert ist.

Eine weitere Übersetzungsvorrichtung ist aus dem Patent Nr. 223 064 bekannt und besteht aus einem Getriebekasten, der mit einem Tellerzahnrad versehen ist, das mit der Verzahnung eines frei gelagerten Ritzels im Eingriff steht, wobei das Ritzel gleichzeitig in das mit der Abtriebswelle fest verbundene Antriebrad eingreift. Mit Hilfe der genannten Übersetzungsvorrichtung kann zwar ein hohes Übersetzungsverhältnis der Umdrehungen unter Verwendung eines einzigen Zahnradpaares erreicht werden; ein Nachteil dieser Lösung besteht jedoch in der Tatsache, dass sowohl die Antriebs- als auch die Abtriebswelle in einer Achse liegen und das Übersetzungsverhältnis konstant ist, wobei ein optimaler Wirkungsgrad der Einrichtung ebenfalls nicht gesichert ist.

Eine weitere bekannte Lösung ist die Übersetzungsvorrichtung mit einem veränderlichen Übersetzungsverhältnis gemäß der Patentschrift Nr. 281 220, die vorwiegend Kraftfahrzeuge betrifft und zwischen dem Eingang und dem Ausgang ein Differentialmechanismus mit drei Eingängen enthält. Einen Nachteil dieser Lösung bildet ihr hoher Preis, die hohe Masse, der geringe Wirkungsgrad und ihre Kompliziertheit, insbesondere wenn es sich um eine größere Anzahl von Zahnrädern mit unterschiedlichem Übersetzungsverhältnis handelt, wie es die gegenwärtige Tendenz in der Industrie verlangt.

Die neueren Übersetzungsvorrichtungen sind zwar mit einer Vorrichtung für den direkten Eingriff ausgerüstet, welche in Funktion tritt, wenn das Kraftfahrzeug eine bestimmte durchschnittliche Fahrgeschwindigkeit erreicht hat, damit in diesem Stadium Verluste im Wandler verhindert werden können. Diese Vorrichtungen sind jedoch äußerst kompliziert und lösen das Problem der seitens des Wandlers bei geringen Geschwindigkeiten verursachten hohen Verluste nicht

Aus der Patentschrift US 3 426 618 ist ferner eine Vorrichtung bekannt, deren Eingang über einen Wandler und ein Untersetzungsgetriebe direkt den anderen Eingang des Übersetzungsgetriebes antreibt, so dass nur ein bestimmter Teil der Leistung den Wandler passiert und die Verluste im Wandler geringer gehalten werden können. Nachteilig erweist sich bei dieser Vorstellung das verhältnismäßig große Übersetzungsgetriebe.

Durch die DE-C2-199 01 229 ist ein Drehtürenantrieb bekannt, der mit einer Übersetzungsvorrichtung arbeitet. Diese Übersetzungsvorrichtung weist ein erstes Zahnrad und ein mit diesem Eingriff kämmendes zweites Zahnrad auf, die jeweils einen kreisförmigen Zahnkranz haben. Die Zahnräder sind unter Beibehaltung ihres Achsenabstands exzentrisch zu ihren Mittelpunkten gelagert. Das erste Zahnrad ist mit einer Antriebswelle verbunden, und das zweite Zahnrad ist mit einer Antriebswelle verbunden. Die Zahnräder sind derart zueinander angeordnet, dass die sich jeweils durch den Mittelpunkt eines Zahnrads und dem neuen Drehpunkt ergebende Exzentrizität der Zahnräder punktsymmetrisch zu deren Wälzpunkt liegen.

Diese bekannte Übersetzungsvorrichtung mit ihrem veränderlichen Übersetzungsverhältnis hat den Nachteil, dass die Zahnräder nur punktförmig ineinander greifen und damit einer größeren Belastung nicht standhalten.

Durch EP 0 518 832 A1 (zeigt die merkmaledes Oberbegriffs) ist eine Verteilungsvorrichtung eines Viertaktverbrennungsmotors bekannt. Die Verteilungsvorrichtung umfasst eine Übersetzungsvorrichtung mit zwei identischen Zahnrädern, welche exzentrisch auf einer mit einem Nocken versehenen Nockenwelle und einer parallel zu dieser angeordneten Zwischenwelle um 180° phasenversetzt exzentrisch angeordnet sind. Der Nokken der Nockenwelle wirkt dabei auf ein Brennkammerventil des Viertaktverbrennungsmotors ein. Die um 180° phasenversetzte Anordnung dient dazu, bei einer konstanten Umdrehungsgeschwindigkeit der Zwischenwelle die Nockenwelle über eine halbe Umdrehung mit einer Minimalgeschwindigkeit und über eine halbe Umdrehung mit einer Maximalgeschwindigkeit anzutreiben. Dabei ist die Minimalgeschwindigkeit beim Öffnen und die Maximalgeschwindigkeit beim Schließen der Brennkammerventile vorgesehen.

Durch GB 889,537 ist ein momentenausgeglichener Antrieb für ein Umlaufsystem mit zyklisch wiederholenden veränderlichen Drehgeschwindigkeiten bekannt. Beispiele für Umfaufsysteme mit zyklisch wiederholenden veränderlichen Drehgeschwindigkeiten sind Rollenscheren, die dazu dienen, kontinuierlich zugeführtes Material in veränderlichen Längen abzuschneiden. Sie bestehen aus einem Paar Rollscherentrommeln mit einander zugeordneten Scherenblättern an deren Umfang, um das kontinuierlich zwischen die Scherenblätter der beiden Rollscherentrommeln eingeführte Material zu zerteilen. Um die Massenträgheitsmomente der Rollenscherentrommeln auszugleichen, ist ein Schwungrad vorgesehen. Das Schwungrad hat das gleiche Massenträgheitsmoment, wie die Rollenscherentrommeln. Eine Antriebswelle treibt dabei über eine Übersetzungsvorrichtung mit veränderlichem Übersetzungsverhältnis die Rollenscherentrommeln einerseits und das Schwungrad andererseits. Die Übersetzungsvorrichtung besteht hierzu aus drei miteinander in Eingriff stehenden Zahnrädern mit veränderlichem Übersetzungsverhältnis. Ein erstes Zahnrad ist auf der Antriebswelle, ein zweites Zahnrad auf einer Rollenscherentrommelwelle, und ein drittes Zahnrad auf der Schwungradwelle jeweils exzentrisch angeordnet. Die drei Wellen verlaufen parallel zueinander.

Das Schwungrad und die Rollenscherentrommeln sind dabei gegenüber der Antriebswelle um 180° phasenversetzt.

Durch FR 863 706 ist ein Getriebe zur Erzeugung einer zyklisch veränderlichen Geschwindigkeit bekannt. Das Getriebe ist zur Steuerung der Schieberbüchsen eines Schiebermotors oder zur Steuerung der Ventile eines Verbrennungsmotors mit zyklisch unterschiedlichen Geschwindigkeiten vorgesehen.

Die Aufgabe der Erfindung besteht darin, eine Übersetzungsvorrichtung gemäß dem Oberbegriff des Anspruchs 1 zu schaffen, bei der die Zahnräder auch größeren Belastungen standhalten können und bei der das Übersetzungsverhältnis leicht an den Anwendungsfall angepasst werden kann.

Diese Aufgabe wird mit den Merkmalen des Anspruchs 1 gelöst.

Gemäß einer weiteren, vorteilhaften Ausbildung der Erfindung stimmt die Anzahl der Zähne des treibenden Zahnsegments mit der Anzahl der Zähne des getriebenen Zahnsegments überein.

Kurzfassung der Zeichnungen

Die Erfindung wird mittels der beigefügten Zeichnungen näher erläutert, wobei zeigen,

Fig. 1    eine schematische Darstellung der Zahnsegmente mit veränderlichem Übersetzungsverhältnis,

Fig. 2    die räumliche Darstellung der Zahnsegmente mit veränderlichem Übersetzungsverhältnis und

Fig. 3    ein schematisch dargestelltes Beispiel für einen gegenseitigen Eingriff der Zahnsegmente mit Kenndaten.

Ausführungsbeispiele der technischen Erfindung

Beispiel Nr. 1

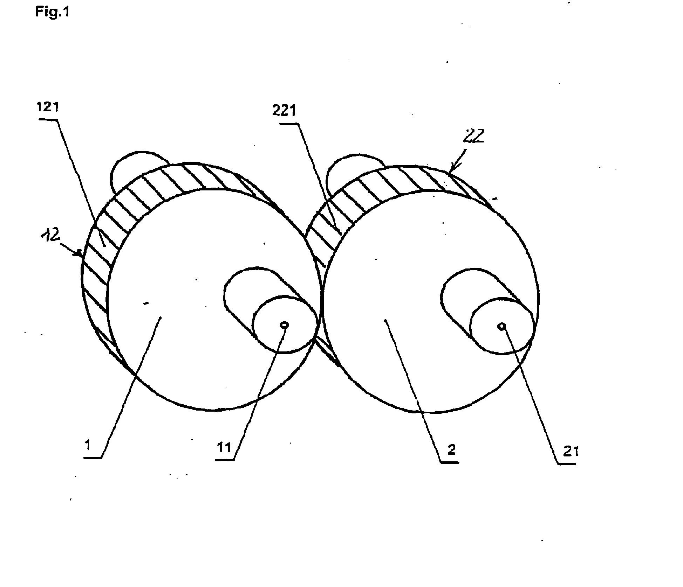

Die Übersetzungsvorrichtung gemäß Fig. 1 besteht aus einer treibenden Welle 11, auf der ein in der Drehachse angebrachtes, treibendes, exzentrisches Zahnsegment 1 auseinandernehmbar gelagert ist. Die Drehachse der treibenden Welle 11 befindet sich außerhalb der Zentrierachse des Zahnsegments 1. Am Umfang des Zahnsegments 1 ist eine äußere, treibende Verzahnung 12 gebildet, die sich aus treibenden Zähnen 121 unterschiedlicher Form und Größe zusammensetzt. Die treibenden Zähne 121 der Verzahnung 12 stehen mit getriebenen Zähnen 221 einer äußeren, getriebenen Verzahnung 22 im Eingriff, wobei der Abstand zwischen der Drehachse der treibenden Welle 11 und der Drehachse der getriebenen Welle 21 konstant ist. Der Modul m der treibenden Zähne 121, stimmt mit dem Modul m der getriebenen Zähne 221 überein. Der Abstand t ($t_1$ usw.) der treibenden Zähne 121 stimmt mit dem Abstand t ($t_2$ usw.) der getriebenen Zähne 221 überein. Die Verzahnung 22 ist am Umfang des Zahnsegments 2 gebildet. In der Drehachse des Zahnsegments 2 ist die getriebene Welle 21 gelagert.

Beispiel Nr. 2

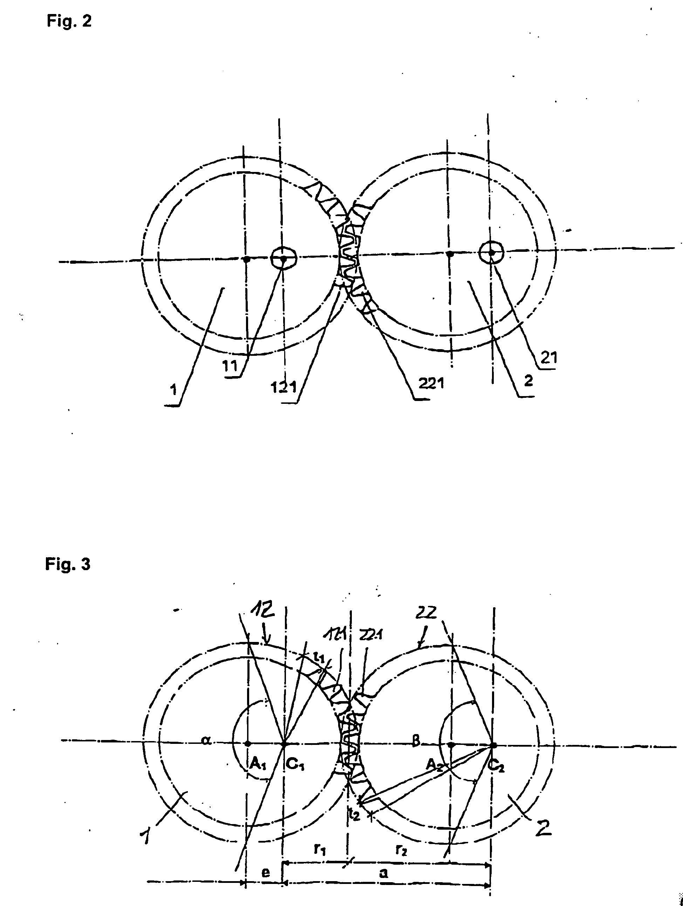

Die Übersetzungsvorrichtung gemäß Fig. 3 besteht aus einem treibenden, exzentrischen Zahnsegment 1, das in einer Drehachse $C_1$ gelagert ist. Die Drehachse $C_1$ befindet sich außerhalb der Mitte des Zahnsegments 1. Am Umfang des Zahnsegments 1 ist eine treibende Verzahnung 12 gebildet, die aus treibenden Zähnen 121 besteht, deren Anzahl $z_1$ ist. Der Wert des Moduls der treibenden Zähnen 121 beträgt $m_1$. Das getriebene exzentrische Zahnsegment 2 ist in der Drehachse $C_2$ angebracht. Die Drehachse $C_2$ befindet sich außerhalb der Mitte des Zahnsegments 2. Am Umfang des Zahnsegments 2 ist eine getriebene Verzahnung 22 gebildet, die aus getriebenen Zähnen 221 besteht, deren Anzahl $z_2$ ist. Der Wert des Moduls der getriebenen Zähne 221 beträgt $m_2$. Die Zähne 121 der Verzahnung 12 stehen mit den getriebenen Zähnen 221 der Verzahnung 22 im Eingriff, wobei der Abstand zwischen der Drehachse $C_1$ und der Drehachse $C_2$ konstant ist und den Wert a aufweist. Der Modul der Zähne 121 $m_1$ stimmt mit dem Modul der Zähne 221 mit dem Wert $m_2$ überein. Der Abstand $t_1$ der Zähne 121 stimmt mit dem Abstand $t_2$ der Zähne 221 überein, und deren Anzahl $z_1$ gleicht der Anzahl der getriebenen Zähne $z_2$. Die Zentrierachse $A_1$ des treibenden exzentrischen Zahnsegments 1 verläuft parallel zur Zentrierachse $A_2$ des Zahnsegments 2. Der Abstand der Zentrierachse $A_1$ von der Drehachse $C_1$ bildet die Exzentrizität $e_1$, die mit der Exzentrizität $e_2$ übereinstimmt, welche den Abstand der Zentrierachse $A_2$ von der Drehachse $C_2$ darstellt. Der Abstandshalbmesser $r_1$ des treibenden exzentrischen Zahnsegments 1 ändert sich mit dem Verdrehungswinkel $\alpha$, und der Abstandshalbmesser $r_2$ des getriebenen exzentrischen Zahnsegments 2 ändert sich mit dem Verdrehungswinkel $\beta$.

Für die aufgezählten Kenndaten gelten folgende Abhängigkeiten:

Der mindeste Mindestabstandshalbmesser beträgt

$$r = a - a/2 - e$$

Bei einer Exzentrizität

$$e = a/2 \cdot \cos \alpha/2$$

Gleichzeitig muss die Bedingung beibehalten sein, dass

$$r1 + r2 = a$$

ist.

Industrielle Anwendbarkeit

Die Erfindung kann an dem am Fahrradpedal befestigten Zahnrad Verwendung finden. Das Pedal ist dabei auf ein Drehmoment mit bestem Wirkungsgrad eingestellt und das seitens des Radfahrers erzeugte Drehmoment wird somit am wirkungsvollsten genutzt.

Bauteilliste

| 1 | treibendes exzentrisches Zahnsegment |
|---|---|
| 11 | treibende Welle |
| 121 | Zähne der treibenden Verzahnung |
| 2 | getriebenes exzentrisches Zahnsegment |
| 21 | getriebene Welle |
| 221 | Zähne der getriebenen Verzahnung |

**Patentansprüche**

1. Kurbelwelle und Übersetzungsvorrichtung aus zwei Zahnsegmenten mit veränderlichem Übersetzungsverhältnis, insbesondere für mechanische Maschinen, Motoren oder Pumpen, bei denen das veränderliche Übersetzungsverhältnis zwecks der Variabilität und Optimierung der Drehmomentbelastung verlangt wird, wobei die Übersetzungsvorrichtung umfasst:

   - eine treibende Welle (11) und eine getriebene Welle (21),
   - ein auf der Drehachse ($C_1$) der treibenden Welle (11) angeordnetes, exzentrisches, treibendes Zahnsegment (1) mit einer treibenden Außenverzahnung (12),
   - ein mit dem treibenden Zahnsegment (1) in Eingriff stehenden, auf der Drehachse ($C_2$) der getriebenen Welle (21) angeordnetes, exzentrisches, getriebenes Zahnsegment (2) mit einer getriebenen Außenverzahnung (22), wobei ein Zahn (121) der treibenden Außenverzahnung (12) an einem Zahn (221) der getriebenen Außenverzahnung (22) angreift und die Exzentrizität (e) der beiden Zahnsegmente (1, 2) gleich ist,

   **dadurch gekennzeichnet,**
   **dass** die Übersetzungsvorrichtung an der Kurbelwelle angeordnet ist, wobei das treibende Zahnsegment (12) von der treibenden Welle (11) abziehbar ist und
   **dass** die Anzahl der gleichzeitig miteinander im Eingriff stehenden Zähne (121, 221) der beiden Zahnsegmente (1, 2) mindestens drei beträgt.

2. Übersetzungsvorrichtung nach Anspruch 1
   **dadurch gekennzeichnet,**
   **dass** die Anzahl der Zähne (121) des treibenden Zahnsegments (1) mit der Anzahl der Zähne (221) des getriebenen Zahnsegments (2) übereinstimmt.

3. Übersetzungsvorrichtung nach Anspruch 1
   **dadurch gekennzeichnet,**
   **dass** der Mindestabstandshalbmesser (r) eines Zahnsegments (1, 2) folgender Beziehung entspricht:

   $$r = a - a/2 - e,$$

   wobei die Exzentrizität
   $e = a/2 \cos \alpha/2$
   und

   $$a = r_1 + r_2$$

   ist und worin bedeuten:

   $\alpha$ = der Drehwinkel des treibenden Zahnsegments (1),
   $r_1$ = der Abstandshalbmesser des treibenden Zahnsegments (1) und
   $r_2$ = der Abstandshalbmesser des getriebenen Zahnsegments (2).

**4.** Übersetzungsvorrichtung nach Anspruch 1, 2 oder 3 **dadurch gekennzeichnet, dass** es sich bei der Kurbelwelle um ein Fahrradpedal handelt, wobei das treibende Zahnsegment an der Kurbelwelle befestigt ist.

**Claims**

**1.** A crankshaft and speed-changing device comprising two toothed quadrants with a variable gear ratio, in particular for mechanical machines, motors or pumps in which the variable gear ratio is needed for the sake of variability and optimization of the torque load, the speed-changing device including:

- a driving shaft (11) and a driven shaft (21);
- an eccentric, driving toothed quadrant (1) which is disposed on the axis of rotation ($C_1$) of the driving shaft (11) and has a driving set of external teeth (12);
- an eccentric, driven toothed quadrant (2), which is in engagement with the driving toothed quadrant (1) and is disposed on the axis of rotation ($C_2$) of the driven shaft (21) and has a driven set of external teeth (22), wherein one tooth (121) of the driving set of external teeth (12) engages one tooth (221) of the driven set of external teeth (22), and the eccentricity (e) of the two toothed quadrants (1, 2) is the same,

**characterized in that**
the speed-changing device is disposed on the crankshaft, and the driving toothed quadrant (12) can be pulled off from the driving shaft (11); and that the number of teeth (121, 221) of the two toothed quadrants (1, 2) that are simultaneously in engagement with one another is at least three.

**2.** The speed-changing device according to claim 1, **characterized in that** the number of teeth (121) of the driving toothed quadrant (1) matches the number of teeth (221) of the driven toothed quadrant (2).

**3.** The speed-changing device according to claim 1, **characterized in that** the minimum spacing radius (r) of a toothed quadrant (1, 2) satisfies the following equation:

$$r = a-a/2-e,$$

in which the eccentricity is

$$e = a/2 \cdot \cos \alpha 2$$

and

$$a = r_1+r_2$$

and in which
$\alpha$ = the rotary angle of the driving toothed quadrant (1),
$r_1$ = the spacing radius of the driving toothed quadrant (1), and
$r_2$ = the spacing radius of the driven toothed quadrant (2).

**4.** The speed-changing device according to claim 1, 2 or 3, **characterized in that** the crankshaft is a bicycle pedal, and the driving toothed quadrant is secured to the crankshaft.

**Revendications**

**1.** Arbre-manivelle et dispositif de démultiplication constitué de deux secteurs dentés à rapport de démultiplication variable, en particulier pour des machines, des moteurs et des pompes mécaniques pour lesquels on a besoin d'un rapport de démultiplication variable afin de faire varier et d'optimiser la sollicitation en couple de rotation, sachant que le dispositif de démultiplication comprend:

- un arbre menant (11) et un arbre mené (21),
- un secteur denté menant (1), excentrique, disposé sur l'axe de rotation ($C_1$) de l'arbre menant (11) et doté d'une denture extérieure menante (12),
- un secteur denté mené (2), excentrique, en prise avec le secteur denté menant (1), disposé sur l'axe de rotation ($C_2$) de l'arbre mené (21) et doté d'une denture extérieure menée (22), sachant qu'une dent (121) de la denture extérieure menante (12) engage une dent (221) de la denture extérieure menée (22) et que l'excentricité (e) des deux secteurs dentés (1, 2) est identique,

**caractérisé en ce que** le dispositif de démultiplication est disposé sur l'arbre-manivelle, sachant que le secteur denté menant (1) peut être retiré de l'arbre menant (11), et **en ce que** le nombre de dents (121, 221) des deux secteurs dentés (1, 2) qui sont simultanément en prise mutuelle est au moins égal à trois.

2. Dispositif de démultiplication selon la revendication 1, **caractérisé en ce que** le nombre de dents (121) du secteur denté menant (1) est égal au nombre de dents (221) du secteur denté mené (2).

3. Dispositif de démultiplication selon la revendication 1, **caractérisé en ce que** le rayon d'espacement minimal (r) d'un secteur denté (1, 2) satisfait à la relation suivante :

$$r = a - a/2 - e,$$

sachant que l'excentricité est

$$e = a/2 \cdot \cos \alpha/2$$

et que

$$a = r_1 + r_2,$$

et où :
$\alpha$ = angle de rotation du secteur denté menant (1),
$r_1$ = rayon d'espacement du secteur denté menant (1) et
$r_2$ = rayon d'espacement du secteur denté mené (2).

4. Dispositif de démultiplication selon la revendication 1, 2 ou 3, **caractérisé en ce que** l'arbre-manivelle est une pédale de bicyclette, sachant que le secteur denté menant (1) est fixé sur l'arbre-manivelle.

Fig.1

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 223064 A
- WO 281220 A
- US 3426618 A
- DE 19901229 C2
- EP 0518832 A1
- GB 889537 A
- FR 863706